# EUROPEAN PATENT SPECIFICATION

(11) **EP 2 995 445 B1**
(45) Date of publication and mention of the grant of the patent: **27.01.2021**
(21) Application number: 14795284.0
(22) Date of filing: 14.03.2014
(51) Int. Cl.: B29D 30/72

(54) **METHOD FOR AFFIXING RUBBER STRIP AND METHOD FOR MANUFACTURING PNEUMATIC TIRE USING SAME**
VERFAHREN ZUR BEFESTIGUNG VON GUMMISTREIFEN UND VERFAHREN ZUR HERSTELLUNG EINES LUFTREIFENS UNTER VERWENDUNG DIESES VERFAHRENS
PROCÉDÉ POUR FIXER UNE BANDE DE CAOUTCHOUC ET PROCÉDÉ DE FABRICATION D'UN PNEU UTILISANT CE PROCÉDÉ

(30) Priority: 07.05.2013 JP 2013097802
(43) Date of publication of application: 16.03.2016
(73) Proprietor: Sumitomo Rubber Industries, Ltd., Kobe-shi, Hyogo 651-0072 (JP)
(72) Inventor: NAKAMURA Yoshinobu, Kobe-shi Hyogo 651-0072 (JP)
(74) Representative: Manitz Finsterwald Patent- und Rechtsanwaltspartnerschaft mbB
(86) International application number: PCT/JP2014/056956
(87) International publication number: WO 2014/181582

(56) References cited:
- EP-A1- 1 375 118
- EP-A1- 1 674 253
- DE-A1- 2 814 160
- JP-A- S6 149 835
- JP-A- H02 143 844
- JP-A- H03 504 946
- US-A- 2 690 784
- US-B1- 6 923 879

## Description

### Technical Field

The present invention relates to a method for affixing rubber strip to wind and affix a rubber strip on a drum side surface around the drum shaft center and a method for manufacturing pneumatic tire using the same.

### Background Art

In a manufacturing process of a green tire, a STW method (strip winding method) with a tape-like rubber strip is widely employed (see Patent Document 1, for example). In the STW, the rubber strip is wound in a helical fashion on an outer surface of a cylindrical drum. This allows rubber members such as an inner liner, a sidewall rubber, a tread rubber and the like to be directly formed on the outer surface of the drum.

However, in late years, to improve a forming accuracy of a tire, a core method using a tire forming drum having a tire shape (popularly called as a "rigid core") is proposed (see Patent Document 2, for example). Specifically the tire forming drum has an interior shape of a vulcanized tire. In the core method, various tire constituent members such as an inner liner, a carcass ply, a bead core, a belt ply, a sidewall rubber, a tread rubber and the like are serially affixed on the tire forming drum (rigid core) so as to form a green tire. Then the green tire is thrown into a vulcanization mold with the tire forming drum (rigid core) and is vulcanized. The tire forming drum (rigid core) shapes an interior shape of the tire. The vulcanization mold shapes an exterior shape of the tire.

In the core method, it is proposed that the rubber member of the tire constituent member is formed in the strip winding method.

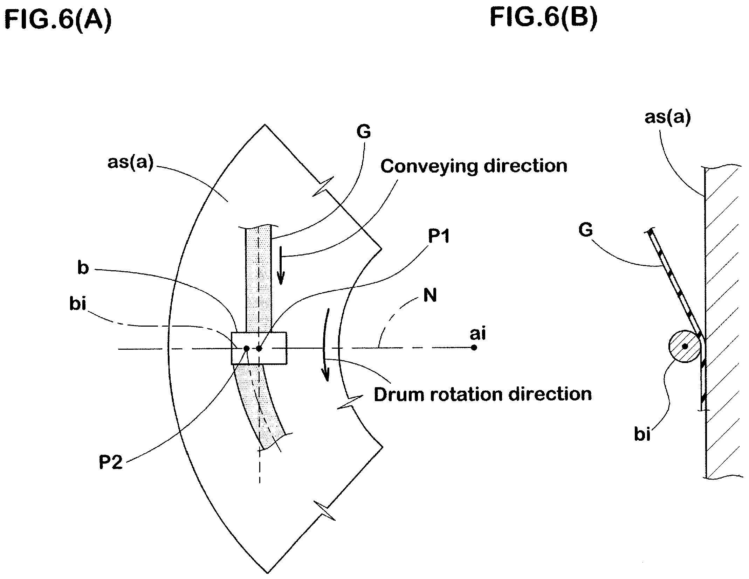

For example, when forming the sidewall rubber in the strip winding method, as shown in Figs. 6(A) and 6(B), a rubber strip G is affixed on a drum side surface (as) of a tire forming drum (a) while winding around a drum shaft center (ai). Conventionally, the rubber strip G was supplied toward an affixing target position P1 on the drum side surface (as), and the supplied rubber strip G was pressed against the drum side surface (as) by a pressing roller (b) disposed at the affixing target position P1. A conveyance direction of the rubber strip G was at a right angle to the radial reference line N which passes through the drum shaft center (ai) and the affixing target position P1. A roller shaft center (bi) of the pressing roller (b) was parallel to the reference line N.

However when applying the rubber strip G in the above-mentioned method, an actual affixing position P2 was misaligned radially more outside than the affixing target position P1. Thus there is a problem that the rubber member was formed with low accuracy. For example, when affixing a rubber strip G having 20 mm in width and 1 mm in thickness on the drum side surface (as) in an circular arc shape having 250 mm in radius, the actual affixing position P2 was misaligned radially more outside than the affixing target position P1 by approximately 10 mm.

This misalignment is attributed to the difference between a velocity of the outer edge side and a velocity of the inner border side of the rubber strip G on the drum side surface (as). That is to say, when affixing the rubber strip G, the rubber strip G is pulled to the outer edge side, which is faster. It is contemplated that this causes the radial misalignment.

EP 1 375 118 A1 discloses a method for building a green tire by spirally winding a rubber strip on a rigid core or a tire building drum.

DE 28 14 160 A1 discloses an apparatus for retreading a tire by applying a rubber band to a tire.

In EP 1 674 253 A1 a method for producing a tire for a two-wheeled motor vehicle is disclosed. In the method rubber strips are provided by applicators onto an annular molding former.

US 2 690 784 A relates to an apparatus for applying strips to the side wall portion of a tire carcass during the building operation.

### CITATION

### Patent literature

Patent Document 1: Japanese published unexamined application No. 2007-176088
Patent Document 2: Japanese published unexamined application No. 2006-160236

### Summary of the invention

### Problems that the Invention is to Solve

The present invention is intended to provide a method for affixing rubber strip, a method for manufacturing pneumatic tire using the same, and a affixing device enabling to effectively reduce a radial misalignment of an affixing position when affixing a rubber strip on a drum side surface around a drum shaft center.

### Means for Solving the Problems

The invention is a method according to claim 1 for affixing rubber strip on a drum side surface of a drum supported rotatably around a drum shaft center while winding and affixing a tape-like unvulcanized rubber strip around the drum shaft center. Through the use of an applicator, the rubber strip is supplied to the drum side surface in a conveyance direction at a right angle to a reference line extending over the drum side surface from the drum shaft center outward in the radial direction. Through the use of an affixing roller, the supplied rubber strip is pressed against and affixed to the drum side surface. The affixing roller is rotatably supported around the roller shaft center parallel to the reference line. Moreover, the roller shaft center is disposed at a distance L downstream from the reference line in the drum rotation direction.

A further aspect of the present disclosure (not part of the claims) is a device for affixing rubber strip to affix the tape-like unvulcanized rubber strip on the drum side surface of the drum supported rotatably around the drum shaft center while winding the rubber strip around the drum shaft center. The device for affixing rubber strip comprises an applicator to supply the rubber strip to the drum side surface in the conveyance direction at a right angle to the reference line extending over the drum side surface from the shaft center of the drum outward in the radial direction, and an affixing roller to press and affix the supplied rubber strip to the drum side surface. The affixing roller is rotatably supported around the roller shaft center parallel to the reference line, and the roller shaft center is disposed at a distance L downstream in the drum rotation direction from the reference line.

In the method for affixing rubber strip and the affixing device according to the invention, the drum is a tire forming drum having a shape of tire to form a sidewall rubber of the tire by affixing the rubber strip on the drum side surface.

In the method for affixing rubber strip and the affixing device according to the present invention, the distance L is preferably in a range of 20 to 40 mm.

An embodiment of the present invention is a method for manufacturing the pneumatic tire comprising a forming step to shape a green cover of the pneumatic tire comprising the method for affixing the rubber strip as set forth in any one of claims 1 to 3, and a vulcanizing step to vulcanize the green cover.

### Effect of the invention

In the present invention, an affixing roller is rotatably supported around a roller shaft center which is parallel to a reference line. The roller shaft center is disposed at a distance L downstream in the drum rotation direction from the reference line. In consequence, when pressing by an affixing roller, a velocity vector component toward the inner border side arises in the rubber strip. The velocity vector component negates the radially outward-directed tension caused by the difference between the outer edge side velocity and the inner border side velocity of the rubber strip. Therefore, the radial misalignment of the rubber strip is suppressed.

### BRIEF DESCRIPTION OF THE DRAWINGS

[Fig. 1] is a side view showing an embodiment of a device for affixing rubber strip according to the present invention.
[Fig. 2] is a cross-sectional view of a tire forming drum on which a green cover is formed.
[Fig. 3] is a cross-sectional view showing an embodiment of the pneumatic tire manufactured in the device for affixing rubber strip of the present invention.
[Figs. 4] (A) is an enlarged front view of an affixing state of the rubber strip shown from a direction of a drum shaft center; and (B) is a side view thereof.
[Fig. 5] is a view showing a frame format explaining a mechanism of misalignment reduction according to the present invention.
[Figs. 6] (A) is an enlarged front view of the affixing state of a conventional rubber strip shown from the direction of the drum shaft center; and (B) is a side view thereof.

### MODES FOR CARRYING OUT THE INVENTION

Hereinafter, a method for affixing rubber strip of the present invention and a device for affixing rubber strip 1 for carrying out the method for affixing is described in detail.

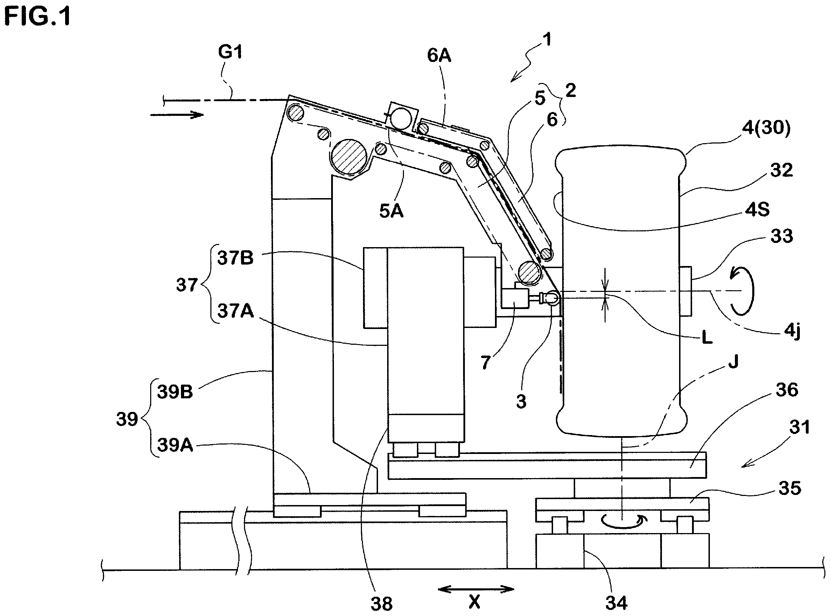

As shown in Fig. 1, a device for affixing rubber strip 1 (hereinafter, may be simply called as an "affixing device 1") comprises an applicator 2, and an affixing roller 3. The affixing device 1 affixes a rubber strip G1 while winding on a drum side surface 4S of a drum 4 around a drum shaft center 4j of the drum 4.

The rubber strip G1 is not particularly limited but is a unvulcanized rubber tape having a thickness of approximately from 0.5 to 3.0 mm and a width of approximately from 10 to 30 mm, for example. The rubber strip G1 of the present invention is serially conveyed into the applicator 2 while being extruded and shaped with a rubber extrusion device (not shown) such as a screw type. Note that the conveyance of the rubber strip G to the applicator 2 may be conducted, using a way that the rubber strip G1 extruded and shaped from the rubber extrusion device is reeled on a roll-like reel body once, and then the rubber strip G1 is conveyed rewinding from the reel body so as to convey it to the applicator 2, for example.

The drum 4 is rotatably supported around the drum shaft center 4j. For the drum 4, in this embodiment, a tire forming drum 30 having a tire shape (a so-called "rigid core") is employed. And the rubber strip G1 is affixed on the drum side surface 4S of the drum 4 so as to form a sidewall rubber, for example. The tire forming drum (hereinafter, may be simply called as a "forming drum") 30 comprises a core main body 32 and a pair of supporting shaft portions 33.

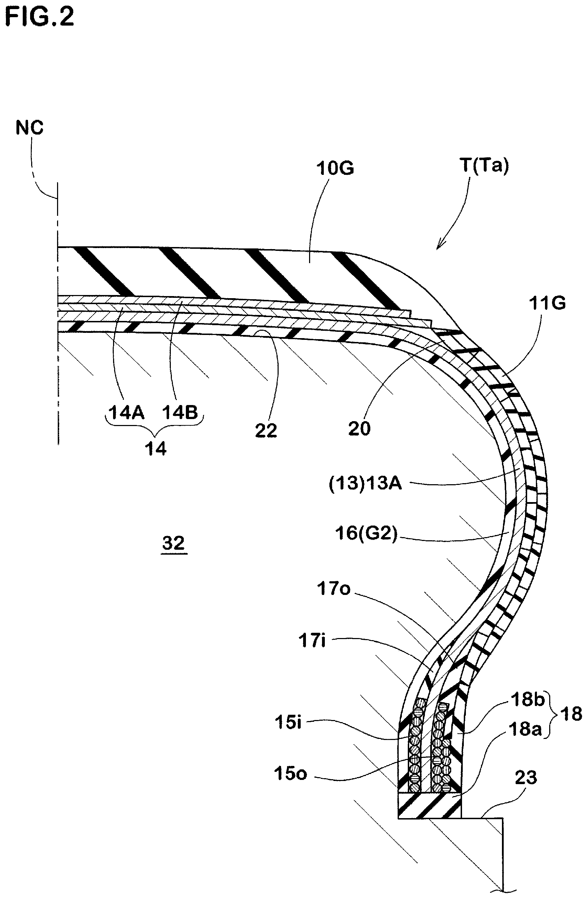

As shown in Fig. 2, the core main body 32 of the present embodiment comprises an outer surface 22 substantially equal to the tire inner surface of the vulcanized tire, and a pair of flange faces 23 connecting to the bead side end of the outer surface 22 and extending axially outward respectively. For the core main body 32, for example, a dividable type using a plural of dividable pieces enabling to divide in the circumferential direction of the tire, an expandable and contractable type using fluid pressure, and a drum type having a diameter expandable and contractable in the radial direction of the tire are preferably used.

As shown in Fig. 1, the supporting shaft portions 33 protrudes ambilaterally outward from the core main body 32 in the tire axial direction concentrically. The supporting shaft portions 33 are rotatably pivoted on a supporting table 31.

The supporting table 31 of the present embodiment comprises a conveying table 35, a pivot table 36, and a core supporting table 37. The conveying table 35 is movable on a locus 34. The pivot table 36 is supported by the conveying table 35 and rotatable around a vertical pivot shaft center J. The core supporting table 37 is supported by the pivot table 36 via a horizontal transporting table 38. The core supporting table 37 comprises a supporting table main body 37A and a connecting portion 37B. The supporting table main body 37A sits on the horizontal transporting table 38. The connecting portion 37B is provided in the supporting table main body 37A. The connecting portion 37B comprises a lock ball mechanism, for example. The connecting portion 37B detachably connects the core supporting table 37 with one of the supporting shaft portions 33 of the tire forming drum 30.

The applicator 2 is supported by the applicator supporting table 39. The applicator supporting table 39 of the present embodiment comprises an applicator transporting table 39A and a supporting portion 39B. The applicator transporting table 39A horizontally moves in the x-axis direction which is perpendicular to the locus 34. The supporting portion 39B rises from the applicator transporting table 39A. On an upper end of the supporting portion 39B, an applicator 2 is fixed.

The applicator 2 supplies the rubber strip G1 to a drum side surface 4S. The applicator 2 is a conveying conveyer, for example. The applicator 2 comprises a lower conveyer portion 5 and an upper conveyer portion 6 in the present embodiment. The lower conveyer portion 5 comprises a conveying belt 5A having an upward surface as a conveying surface and being capable of circulating. The upper conveyer portion 6 comprises pressing belt 6A having a downward surface as a pressing surface and being capable of circulating. The rubber strip G1 is conveyed while being sandwiched in between the pressing surface and the conveying surface. This prevents misalignment during the conveyance of the rubber strip G1. The conveying belt 5A and the pressing belt 6A are synchronously driven at the same speed. The applicator 2 comprises a cylinder 7.

The affixing roller 3 affixes the supplied rubber strip G1 toward the drum side surface 4S. The affixing roller 3 of the present embodiment is rotatably supported at a rod tip of the cylinder 7 via a roller holder. The affixing roller 3 affixes the rubber strip G1 in pressing against the drum side surface 4S by air pressure of the cylinder 7. The affixing roller 3 of the present embodiment is formed of a sponge material, where at least the outer surface is elastically deformable. Therefore, the affixing roller 3 presses the rubber strip G1 by the surface contact against the drum side surface 4S. The surface contact can be stabilized the affixing state more than a line contact.

Next is an embodiment of a manufacturing method of the pneumatic tire T by use of the affixing device 1 composed as above stated. The manufacturing method of the pneumatic tire T comprises a forming step of a green cover Ta and a vulcanizing step of the green cover Ta. In the forming step of the green cover Ta, the tire forming drum 30 is employed.

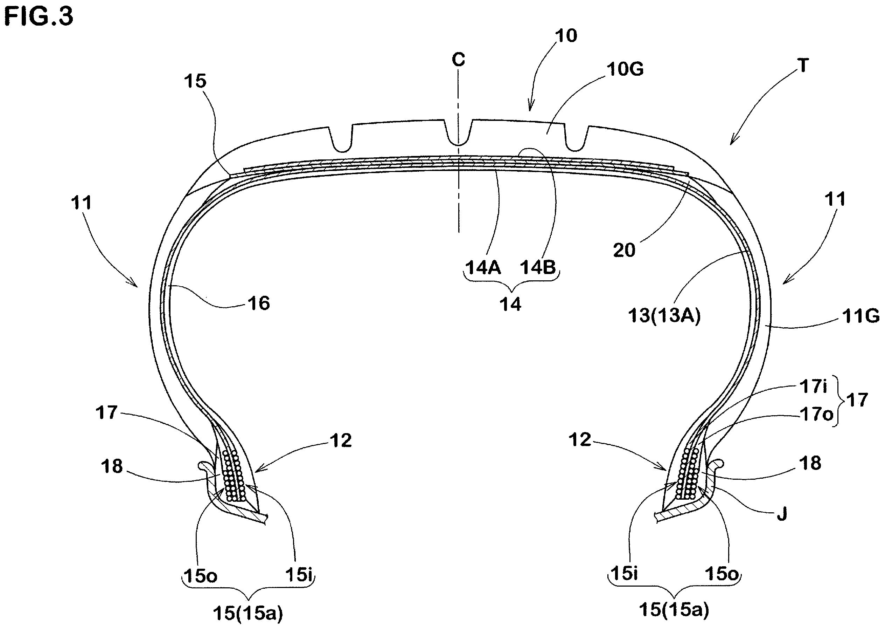

As shown in Fig. 3, the tire T comprises a carcass 13, a belt layer 14, and an inner liner 16. The carcass 13 is disposed from a tread portion 10 via a sidewall portion 11 in bead portions 12, 12 in both sides. The belt layer 14 is disposed inward of the tread portion 10 and outward of the carcass 13 in the radial direction of the tire. The inner liner 16 is arranged on the tire cavity surface and composed of rubber with good air-impermeant.

And the tire T comprises a tread rubber 10G contacting a road surface and a sidewall rubber 11G disposed more inward than a tread rubber 10G in the radial direction of the tire.

The carcass 13 of the present embodiment is formed of a single carcass ply 13A comprising a carcass cord radially arranged. The radial arrangement means that the carcass cord is inclined at an angle of from 75 to 90 degrees with respect to the tire equator C. The carcass ply 13A is formed by covering the both surfaces of an arranged body of the carcass cords arranged in parallel at a constant pitch with topping rubber.

The belt layer 14 of the present embodiment is formed from two belt plies 14A and 14B of the steel cords covered with the topping rubber. The belt cords are inclined with respect to the tire equator C at an angle of from 15 to 40 degrees so as to intersect with one another. Radially outward the belt layer 14, a band layer (not shown) comprising a cord along with the circumferential direction of the tire may be included, for example. In the present embodiment, there is a cushion rubber 20 to fill a gap between the belt layer 14 and the carcass 13 is disposed.

The bead portion 12 is provided in at least one of the radially inner and outer sides of the carcass 13 with a bead core 15. The bead core 15 of the present embodiment comprises an inner bead core 15i disposed axially inside of the carcass 13 and an outer bead core 15o disposed axially outside of the carcass 13.

The bead core 15 is composed by winding a non-extensible bead wire 15a at least once, plural times in the present embodiment, in the circumferential direction of the tire. For the bead wire 15a, steel cord, steel wire, aromatic polyamide cord and the like are preferably employed.

The bead portion 12 is provided with an apex 17 extending radially outward from the radially outer surface of the bead core 15 in a tapered manner. The apex 17 helps to improve the bending rigidity of the bead portion 12 and steering stability. The apex 17 comprises in the present embodiment an inner apex 17i disposed radially outside of the inner bead core 15i and an outer apex 17o disposed radially outside of the outer bead core 150. And the bead portion 12 is provided with a hard clinch rubber 18 to prevent abrasion caused by contact with the rim J.

As shown in Fig. 2, in the step of forming the green cover Ta, a basal portion 18a of the clinch rubber 18 and an inner liner 16 are affixed on the outside of the core main body 32 first. The basal portion 18a of the clinch rubber 18 is a rectangular in cross-section, for example, and wound on the flange face 23 in a ring-shape.

The inner liner 16 is formed by winding the unvulcanized and wide rubber sheet G2 on the outer surface 22 of the core main body 32, for example. In the winding, the rubber sheet G2 is positioned at one end of the outer surface 22 of the core main body 32 and rolling the core main body 32 in the supporting shaft portion 33 so as to affix on all circumferences of the outer surface 22. Meanwhile, the inner liner 16 can be formed by winding the wide rubber sheet G2 on a region of the tread portion 10 and winding and affixing a long rubber strip (not shown) in regions of the sidewall portion 11 and the bead portion 12 disposed its both sides.

Next, in the present embodiment, outside the bead portion 16 of the region of the bead portion 12, the inner bead core 15i is manufactured. The inner bead core 15i is formed by spirally winding the single bead wire 15a, which is continuously supplied, more than once so as to stack from the basal portion 18a of the clinch rubber 18 in the tire radial direction, for example. Then, an inner apex 17i is disposed on the radially outer side of the inner bead core 15i.

Next, the carcass 13, the outer bead core 150, the outer apex 170, an accessory portion 18b connected with the basal portion 18a of the clinch rubber 18, the cushion rubber 20, and the belt layer 14 are disposed. In the present embodiment, each of the tire constituent members is formed of a wide integrally-extruded-type ply member and a rubber sheet.

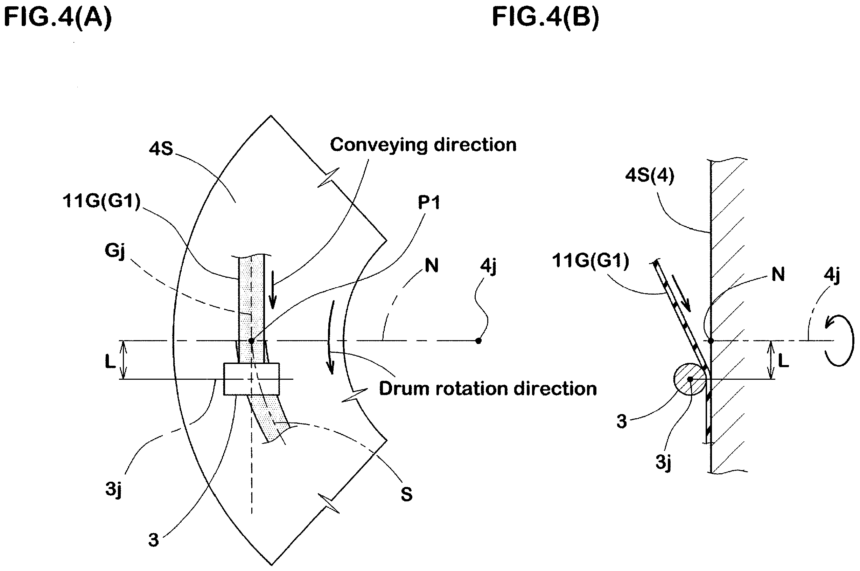

Next, a sidewall rubber 11G is formed. The sidewall rubber 11G is formed in an affixing method of the rubber strip of the present invention. As shown in Figs. 4 (A) and (B), the rubber strip G1 of the sidewall rubber 11G is supplied by the applicator 2 to the drum side surface 4S in the conveyance direction perpendicular to a reference line N. The reference line N is a radial line extending radially outward from the drum center 4j on the drum side surface 4S. In the present embodiment, the reference line N horizontally extends. A point at the intersection of a width centerline Gj of the rubber strip G1 supplied in the conveyance direction and the reference line N is an affixing target position P1. In other words, when affixing the rubber strip G1 on the discretionary affixing target position P1 on the reference line N, the rubber strip G1 is supplied in the conveyance direction so that its width centerline Gj passes the affixing target position P1.

The affixing roller 3 is supported rotatably around the roller shaft center 3j parallel to the reference line N. The roller shaft center 3j is disposed from the reference line N at a distance L downstream in the drum rotation direction. The distance L means in a narrow sense the roller shaft center 3j parallel to the drum shaft center 4j and the reference line N in a side view.

Such a disposition of the affixing roller 3 inhibits a radial misalignment caused by a difference in speed between the radially outer edge side and the radially inner border side of the rubber strip G1. That is to say, the rubber strip G1 is affixed in a locus similar to a target locus S passing through the affixing target position P1. Meanwhile, the "target locus S" means the locus when the rubber strip G1 is affixed on the affixing target position P1 without misalignment.

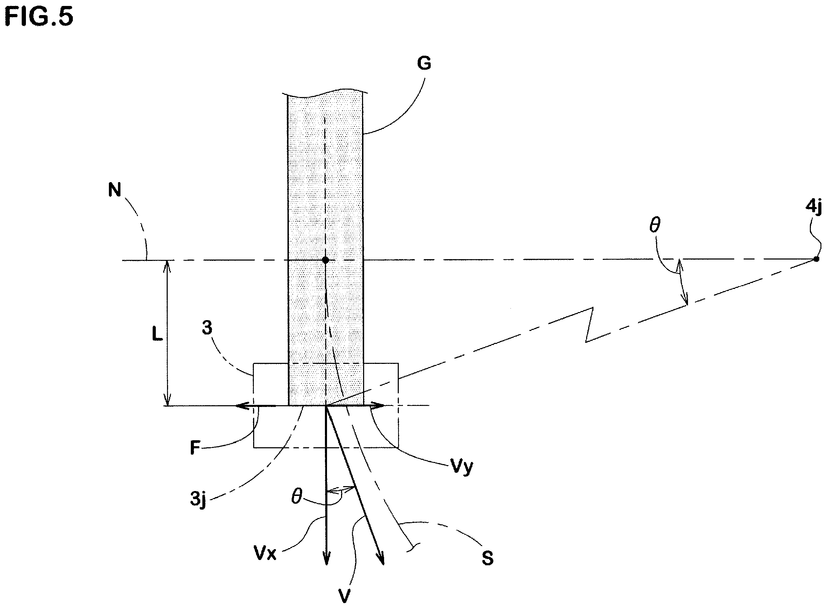

The inhibit mechanism of misalignment of the rubber strip G1 in the present invention is inferred as follows: Fig 5 is a view showing a frame format explaining a mechanism of misalignment inhibition of the rubber strip G1. As shown in Fig. 5, when arranging the roller shaft center 3j disposed at the distance L downstream in the drum rotation direction from the reference line N, the rubber strip G1 receives a velocity vector V perpendicular to the radial direction of the drum along of the drum rotation by pressing the affixing roller 3. The velocity vector V comprises an inward-directed velocity vector component Vy parallel to the reference line N and a velocity vector component Vx perpendicular to the reference line N. The inward velocity vector component Vy negates an outward-directed tension F attributed to a velocity difference between the outer edge side and the inner border of the rubber strip G1, and furthermore moves the rubber strip G1 to the inner border side. Thereby the above-mentioned misalignment is inhibited, and the rubber strip G1 can be affixed in the locus similar to the target locus S.

Meanwhile, when the rubber strip G1 having a width of 20 mm and a thickness of 1 mm is affixed on the drum side surface 4S in an arc-like fashion having 250 mm in radius, there arises a misalignment about 10 mm apart radially. Therefore, when forming the sidewall rubber of the conventional tire T, the distance L is preferably set to in a range of from 20 to 40 mm. This setup makes an amount of the radial misalignment from the affixing target position P1 to be not more than about 3 mm, moreover not more than 2 mm.

Next, as shown in Fig. 2, the tread rubber 10G is disposed. The tread rubber 10G is formed by the integrally-extruded rubber sheet, for example.

Thus, a green cover Ta is formed outside the core main body 32. Next, the core main body 32 and the green cover Ta is integrally vulcanized and molded in a vulcanization mold (not shown). Thus the tire T is manufactured.

The method for affixing rubber strip of the present invention is not limited to the method of forming only the sidewall rubber 11G. The method for affixing rubber strip of the present invention can form the apex 17, the sidewall portion 11, or the inner liner 16 of the region of the bead portion 12, for example.

Although especially preferred embodiment of the present invention has been described in detail, the invention is not limited to the illustrated embodiment, and various modifications can be made.

### Embodiment

To confirm an effect of the present invention, by use of an affixing device having a structure shown in Fig. 1, a rubber strip was wound and affixed around a drum shaft center on a drum side surface of a rotating drum. And measured was an amount of misalignment in radial direction of the drum between actual affixing position P2 and an affixing target position P1, and wrote down on Table 1. Velocity vector components Vx, Vy (shown in Fig. 5) were calculated. Meanwhile, regarding amount of misalignment, a showing (-) means a misalignment in the radially outward of the drum and a showing (+) means a misalignment in the radially inward of the drum.

The rubber strip has a width of 20 mm and a thickness of 1 mm. A distance R of the affixing target position P1 from the drum shaft center, and a distance L of the pressing roller from the reference line N are variable numbers.

**[Table 1]**

| | Distance R (mm) | Distance L (mm) | Ratio of velocity vector Vy/Vx(%) | Amount of misalignment (mm) |
|---|---|---|---|---|
| Com. Ex. 1 | 250 | 0 | 0 | -10 |
| Ex. 1 | | 10 | 2 | -4 |
| Ex. 2 | | 20 | 4 | -1 |
| Ex. 3 | | 30 | 6 | 0 |
| Ex. 4 | | 40 | 8 | +1 |
| Ex. 5 | | 50 | 10 | +4 |
| Ex. 6 | | 60 | 12 | +6 |
| Ex. 7 | 200 | 30 | 8 | +1 |
| Ex. 3 | 250 | | 6 | 0 |
| Ex. 8 | 300 | | 5 | 0 |
| Ex. 9 | 200 | 25 | 6 | 0 |
| Ex. 3 | 250 | 30 | | 0 |
| Ex. 10 | 300 | 35 | | 0 |

As shown by Table, a roller shaft center is disposed at a distance downstream in the drum rotation direction, and an amount of misalignment can be reduced.

### Description of Sign

- 1: Device for affixing rubber strip
- 2: Applicator
- 3: Affixing roller
- 3j: Roller shaft center
- 4: Drum
- 4j: Drum shaft center
- 4S: Drum side surface
- 30: Tire forming drum
- G1: Rubber strip
- N: Reference line

## Claims

1. A method for affixing rubber strip (G1) on a drum side surface (4S) of a drum (4) supported rotatably around a drum shaft center (4j) by winding and affixing a tape-like unvulcanized rubber strip (G1) around the drum shaft center (4j); wherein
the rubber strip (G1) is supplied to the drum side surface (4S) in a conveyance direction at a right angle to a reference line (N) extending over the drum side surface (4S) from the drum shaft center (4j) radially outward through the use of an applicator (2),
the supplied rubber strip (G1) is pressed against and affixed to the drum side surface (4S) through the use of an affixing roller (3), wherein the pressing by the affixing roller (3) is on a width centerline (Gj) of the in conveyance direction supplied rubber strip (G1) and, the affixing roller (3) is rotatably supported around the roller shaft center (3j) parallel to the reference line (N), and
the roller shaft center (3j) is disposed at a distance L downstream from the reference line (N) in the drum rotation direction.

2. The method for affixing rubber strip (G1) as set forth in claim 1, wherein the drum (4) is a tire forming drum (30) having a tire shape to form a sidewall rubber of a tire (T) by affixing the rubber strip (G1) on the drum side surface (4S).

3. The method for affixing rubber strip (G1) as set forth in claim 1 or 2, wherein the distance L is in a range of from 20 to 40 mm.

4. A method for manufacturing pneumatic tire (T) comprising a forming step to shape a green cover (Ta) of the pneumatic tire (T) comprising the method for affixing rubber strip (G1) as set forth in any one of claims 1 to 3, and a vulcanizing step to vulcanize the green cover (Ta).

## Patentansprüche

1. Verfahren zum Befestigen eines Kautschukstreifens (G1) an einer Trommelseitenfläche (4S) einer Trommel (4), die drehbar um ein Trommelwellenzentrum (4j) gelagert ist, indem ein bandartiger unvulkanisierter Kautschukstreifen (G1) um das Trommelwellenzentrum (4j) gewickelt und befestigt wird;
wobei der Kautschukstreifen (G1) der Trommelseitenfläche (4S) in einer Förderrichtung unter einem rechten Winkel zu einer Bezugslinie (N), die sich über die Trommelseitenfläche (4S) von dem Trommelwellenzentrum (4j) radial nach außen erstreckt, unter Verwendung eines Anlegers (2) zugeführt wird,
der zugeführte Kautschukstreifen (G1) mit Hilfe einer Befestigungswalze (3) gegen die Trommelseitenfläche (4S) gepresst und befestigt wird, wobei das Pressen durch die Befestigungswalze (3) auf einer Breitenmittellinie (Gj) des in Förderrichtung zugeführten Kautschukstreifens (G1) erfolgt und,
die Befestigungswalze (3) um das Walzenwellenzentrum (3j) parallel zur Bezugslinie (N) drehbar gelagert ist, und
das Walzenwellenzentrum (3j) in einem Abstand L stromabwärts von der Bezugslinie (N) in Trommeldrehrichtung angeordnet ist.

2. Verfahren zum Befestigen eines Kautschukstreifens (G1) nach Anspruch 1, wobei die Trommel (4) eine Reifenformgebungstrommel (30) mit einer Reifenform ist, um einen Seitenwandkautschuk eines Reifens (T) durch Befestigen des Kautschukstreifens (G1) auf der Trommelseitenfläche (4S) zu formen.

3. Verfahren zum Befestigen eines Kautschukstreifens (G1) nach Anspruch 1 oder 2, wobei der Abstand L in einem Bereich von 20 bis 40 mm liegt.

4. Verfahren zum Herstellen eines Luftreifens (T) mit einem Formgebungsschritt, um eine Rohdecke (Ta) des Luftreifens (T) zu formen, umfassend das Verfahren zum Befestigen eines Kautschukstreifens (G1) nach einem der Ansprüche 1 bis 3 und einen Vulkanisationsschritt, um die Rohdecke (Ta) zu vulkanisieren.

## Revendications

1. Procédé pour fixer une bande de caoutchouc (G1) sur une surface latérale (4S) d'un tambour (4) supporté en rotation autour d'un arbre central (4j) du tambour, en enroulant et en fixant une bande de caoutchouc non vulcanisé (G1) similaire un ruban autour de l'arbre central (4j) du tambour ; dans lequel la bande de caoutchouc (G1) est amenée à la surface latérale (4S) du tambour dans une direction de convoyage à angle droit par rapport à une ligne de référence (N) s'étendant sur la surface latérale (4S) du tambour depuis l'arbre central (4j) du tambour radialement vers l'extérieur au moyen de l'utilisation d'un applicateur (2),
la bande de caoutchouc (G1) amenée est pressée contre et fixée sur la surface latérale (4S) du tambour au moyen de l'utilisation d'un galet de fixation (3), de sorte que le pressage par le galet de fixation (3) a lieu sur une ligne centrale (Gj) dans le sens de la largeur de la bande de caoutchouc (G1) amenée en direction de convoyage, et
le galet de fixation (3) est supporté en rotation autour de l'arbre central (3j) du galet parallèlement à la ligne de référence (N), et
l'arbre central (3j) du galet est disposé à distance L en aval de la ligne de référence (N) dans la direction de rotation du tambour.

2. Procédé pour fixer une bande de caoutchouc (G1) selon la revendication 1, dans lequel le tambour (4) est un tambour de formage de pneumatique (30) ayant la forme d'un pneumatique afin de former un caoutchouc de paroi latérale d'un pneumatique (T) en fixant la bande de caoutchouc (G1) sur la surface latérale (4S) du tambour.

3. Procédé pour fixer une bande de caoutchouc (G1) selon la revendication 1 ou 2, dans lequel la distance (L) est dans une plage allant de 20 à 40 mm.

4. Procédé pour fabriquer un bandage pneumatique (T) comprenant une étape de formage pour conformer une couverture "verte" (green) (Ta) du bandage pneumatique (T) comprenant le procédé pour fixer une bande de caoutchouc (G1) selon l'une quelconque des revendications 1 à 3, et une étape de vulcanisation pour vulcaniser la couverture verte (Ta).
